# DEMANDE DE BREVET EUROPEEN

(11) **EP 0 918 299 A1**
(43) Date de publication de la demande: **26.05.1999**
(21) Numéro de dépôt: 98402865.4
(22) Date de dépôt: 19.11.1998
(51) Int. Cl.: G06K 7/00

(54) **Support de connecteur de carte électronique**

(30) Priorité: 19.11.1997 FR 9714502
(71) Demandeur: SAGEM SA, 75116 Paris (FR)
(72) Inventeur: Poggi, Philippe, 75015 Paris (FR)
(74) Mandataire: Bloch, Gérard

(57) **Abrégé**

Le support comprend des moyens (7, 9, 16) de réception d'au moins un connecteur, des bras élastiques (12, 13) de fixation détachable du connecteur sur le support et des languettes de clipsage (20) de fixation du support sur un châssis d'appareil, les moyens de réception (7, 9, 16) et les bras élastiques (12, 13) étant agencés pour recevoir et fixer des connecteurs de différentes épaisseurs.

L'invention s'applique bien aux appareils à pré-paiement.

## Description

Certains appareils électroniques grand public ne fonctionnent que sous réserve du paiement, généralement du paiement préalable ou pré-paiement, par leurs propriétaires, de la prestation assurée grâce à ces appareils. Il peut en être ainsi de téléphones publics, de distributeurs, de décodeurs pour chaînes de télévision cryptées, etc.

Comme moyen de paiement approprié, on considère, comme en l'espèce, la carte de paiement électronique à puce et/ou bande magnétique.

Généralement encore, ces appareils comportent un connecteur, pourvu d'organes de lecture de la puce (lamelles de contact pour les plages de connexion) ou de la bande magnétique (tête de lecture), duquel est solidaire un support flexible portant une nappe de pistes conductrices pour relier le connecteur, et donc la carte, aux circuits électroniques de traitement des appareils.

Jusqu'à maintenant, on utilisait, entre le connecteur et le flexible, une petite carte de circuit imprimé interface, ou intermédiaire, sur laquelle on fixait le connecteur et qu'on fixait sur le châssis des appareils.

Pour des petites quantités d'appareils, cette solution était satisfaisante. Par contre, pour des quantités de production de masse, le coût de la réalisation et du montage des cartes de circuit imprimé intermédiaires est difficilement tolérable et c'est pourquoi la demanderesse a voulu s'en affranchir.

A cet effet, l'invention concerne un support de connecteur de carte électronique comprenant des moyens de réception d'au moins un connecteur, des moyens de fixation détachable du connecteur sur le support et des moyens de fixation du support sur un châssis d'appareil, les moyens de réception et les moyens de fixation étant agencés pour recevoir et fixer des connecteurs de différents types.

Par type de connecteur, il faut essentiellement entendre un connecteur d'épaisseur déterminée.

L'invention est remarquable à plus d'un titre. D'abord, les connecteurs vont pouvoir être montés de manière amovible avec un montage-démontage aisé après implantation des circuits de traitement dans les appareils. Ensuite, et surtout, la demanderesse, ayant cherché à éliminer une pièce, l'a effectivement éliminée mais a osé en rajouter une autre, au mépris d'une évidente logique. Cependant, non seulement le résultat recherché a été atteint - réduire le coût en remplaçant un composant électronique par un composant strictement mécanique - mais un autre l'a également été : pourvoir les appareils d'un support de connecteur universel, apte à recevoir des connecteurs de différentes épaisseurs.

Dans la forme de réalisation préférée du support de l'invention, les moyens de fixation sur le support comprennent des bras élastiques d'appui.

Avantageusement, les moyens de fixation du support comprennent des languettes de clipsage, sur poutres du châssis des appareils.

Dans certaines formes de réalisation, le support de l'invention peut être agencé pour recevoir une pluralité de connecteurs.

L'invention sera mieux comprise à l'aide de la description suivante de deux formes de réalisation préférées du support, en référence au dessin annexé, sur lequel :
- la figure 1 représente une vue en perspective d'un connecteur à loger dans le support;
- la figure 2 représente une vue en perspective de dessus de la première forme de réalisation du support;
- la figure 3 représente une vue en perspective de dessous du support de la figure 2;
- la figure 4 représente une vue en perspective d'une portion de châssis d'appareil devant recevoir la deuxième forme de réalisation du support et
- la figure 5 représente une vue en perspective d'une portion du châssis de l'appareil de la figure 4 avec la deuxième forme de réalisation du support et deux connecteurs.

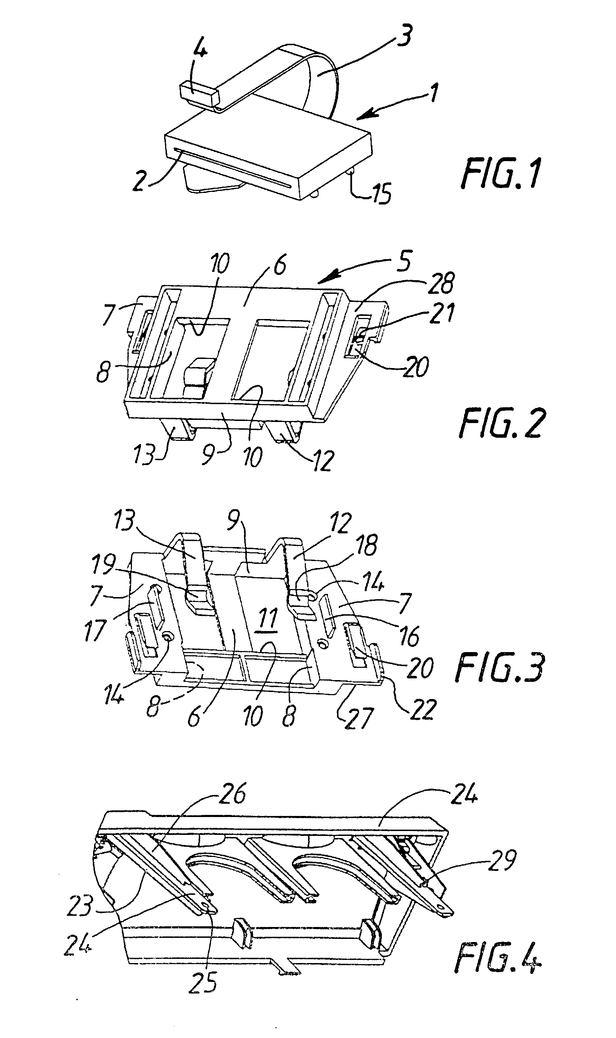

En référence à la figure 1, un connecteur 1, destiné à être reçu dans le support de l'invention, a une forme générale parallélépipédique, avec une fente 2 d'introduction de carte électronique.

Des bornes, ou lamelles, de contact, non visibles sur la figure, destinées à venir en prise sur des plages de connexion de la puce de la carte électronique, sont serties dans le connecteur et sont électriquement raccordées à des pistes conductrices d'un support flexible et souple 3 portant, à son extrémité libre, un petit connecteur 4 de raccordement à des circuits électroniques de traitement d'un appareil, pour l'échange d'informations entre la carte et ces circuits de traitement.

En référence aux figures 2 et 3, un support simple 5 comporte une platine 6 prolongée, latéralement, par deux ailes 7 de réception de connecteur et de fixation du support à des poutres du châssis de l'appareil. Abaissées par rapport à la platine, les ailes 7 ménagent deux rebords latéraux 8 d'un logement 11 délimité par un troisième rebord du fond transversal 9 reliant les deux ailes 7, pour le passage du flexible 3 du connecteur.

Le logement est ouvert vers le bas et percé, vers le haut, de deux ouvertures 10 de poussée et d'extraction du connecteur. S'étendant au-dessous des ouvertures d'extraction 11, le rebord de fond 9 porte deux bras coudés élastiques 12, 13 d'appui du connecteur pour le pousser contre les ailes de la platine. Les ailes 7 comportent des orifices 14 de réception de tétons de positionnement 15 du connecteur.

Pour introduire le connecteur 1 dans le support, on fait glisser ses tétons 15 sur les ailes 7 du support jusqu'à ce que ces tétons pénètrent dans les orifices 14. Le connecteur 1 reste ainsi plaqué sous l'action de la poussée des bras 12, 13. On notera que deux petites glissières 16, 17 ont été implantées sous les ailes pour encadrer le connecteur et constituer un logement, ou espace, de réception. Du fait de l'élasticité des bras 12, 13, le support peut donc recevoir des connecteurs de différentes épaisseurs, entre le plan inférieur des ailes 7 et les extrémités bombées 18, 19 des bras d'appui 12, 13. Pour extraire le connecteur 1 du support, et donc l'en détacher, il suffit, par les ouvertures 11, de pousser le connecteur contre l'action des bras 12, 13 pour faire sortir les tétons 15 de leurs orifices 14 et de faire glisser le connecteur sur les ailes 7 dans la direction opposée à celle du rebord de fond 9.

On remarquera que les orifices 14 sont positionnés sur les ailes 7 de la platine 6 pour que le flexible 3, en position de réception du connecteur, puisse passer entre le connecteur et le rebord de fond 9.

Les ailes 7 de la platine 6 comportent, chacune, une languette élastique 20 pourvue, à son extrémité, d'un bossage de clipsage 21, pour la fixation du support au châssis de l'appareil. Les ailes comportent un petit rebord latéral 22, associé à une languette de clipsage, pour le guidage du support sur des poutres de fixation du châssis.

Les poutres de fixation 23 font saillie vers l'arrière hors d'une face avant 24 de l'appareil (figure 4). A leur extrémité libre arrière 24, elles sont percées d'un orifice 25 de réception d'un bossage 21 de clipsage du support.

Les poutres portent, vers le haut, une nervure 26 de blocage du support contre laquelle le bord avant 27, adjacent au rebord latéral 22 du support, vient en butée, dans un épaulement d'extrémité 29 empêchant le support de basculer.

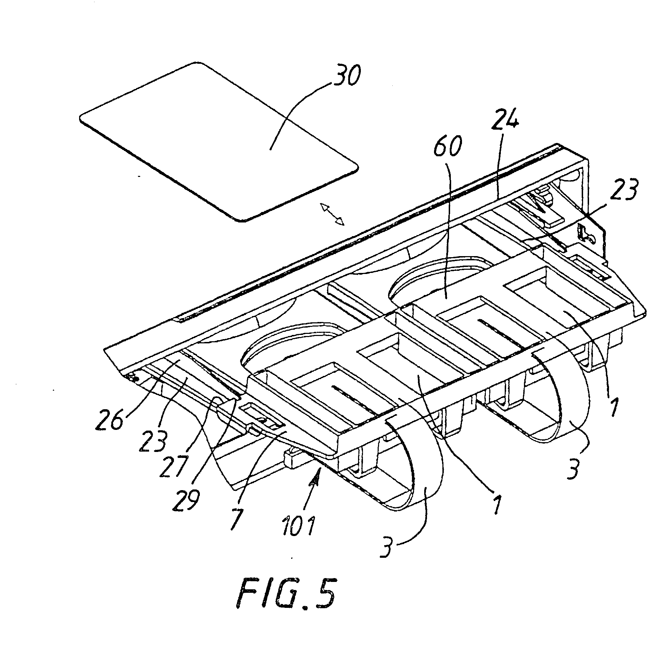

Pour fixer le support double 101 de la figure 5 sur les poutres 23 de la face avant 24, avec ses deux connecteurs 1, on glisse les poutres entre la face inférieure 28 (figure 2) des ailes 7 et leurs languettes élastiques de clipsage 20 jusqu'à ce que les bossages 21 parviennent dans les orifices de clipsage 25 des poutres 23 et que le bord 27 du support 101 vienne en butée contre les nervures 26.

On remarquera que l'appareil dont la face avant 24 est représentée sur la figure 5, en l'espèce un décodeur pour chaînes de télévision cryptées, fait intervenir, pour son fonctionnement, deux connecteurs 1 pour cartes électroniques 30, les connecteurs étant reçus sur une platine élargie 60, toujours prolongée par deux ailes de réception et de fixation 7.

## Revendications

1. Support de connecteur (1) de carte électronique (30) comprenant des moyens (7, 9, 16) de réception d'au moins un connecteur (1), des moyens (12, 13) de fixation détachable du connecteur (1) sur le support (5) et des moyens (20, 22) de fixation du support (5) sur un châssis d'appareil (24), les moyens de réception (7, 9, 16) et les moyens de fixation (12, 13) étant agencés pour recevoir et fixer des connecteurs de différents types.

2. Support de connecteur selon la revendication 1, dans lequel les moyens de fixation sur le support comprennent des bras élastiques d'appui (12, 13).

3. Support de connecteur selon l'une des revendications 1 et 2, dans lequel les moyens de réception comprennent une platine (6) prolongée par deux ailes latérales (7).

4. Support de connecteur selon la revendication 3, dans lequel les ailes de réception (7) comportent des orifices (14) de positionnement de connecteur.

5. Support de connecteur selon l'une des revendications 3 et 4, dans lequel la platine de réception (6) est percée d'ouvertures (10) d'extraction de connecteur.

6. Support de connecteur selon l'une des revendications 1 à 5, dans lequel les moyens de fixation du support comprennent des languettes de clipsage (20).

7. Support de connecteur selon la revendication 6, dans lequel les languettes de clipsage (20) sont ménagées sur les ailes de réception (7).

8. Support de connecteur selon l'une des revendication 1 à 7, dans lequel il est prévu deux ailes (7) de réception et de fixation, prolongeant une platine élargie (60), pour la réception de plusieurs connecteurs.
